# EUROPÄISCHE PATENTSCHRIFT

(11) **EP 1 734 648 B1**
(45) Veröffentlichungstag und Bekanntmachung des Hinweises auf die Patenterteilung: **15.08.2012**
(21) Anmeldenummer: 05012654.9
(22) Anmeldetag: 13.06.2005
(51) Int. Cl.: H02P 6/18

(54) **Asymmetrische Ansteuerung eines sensorlosen und bürstenlosen Elektromotors**
Asymmetric excitation of a sensorless and brushless electrical motor
Excitation asymétrique d'un moteur électrique sans capteur et sans balai

(43) Veröffentlichungstag der Anmeldung: 20.12.2006
(73) Patentinhaber: Brose Fahrzeugteile GmbH & Co. KG, Würzburg, 97076 Würzburg (DE)
(72) Erfinder: Schwarzkopf, Johannes, 97828 Marktheidenfeld (DE)
(74) Vertreter: Isarpatent

(56) Entgegenhaltungen:
- DE-A1- 10 346 711
- DE-A1- 19 860 448
- DE-A1- 19 938 678
- US-A- 5 969 491

## Beschreibung

Die Erfindung bezieht sich auf ein Verfahren zur Kommutierung der Motorphasen eines Elektromotors mit jeweils eines kanstanten Spannung in einem Ansteuerwinkel.

Bei elektronisch kommutierten Elektromotoren (auch EC-Motor oder BLDC-Motor genannt) wird über eine Umrichterschaltung ein Drehstromnetz generiert, auf die Spulen des Stators des Elektromotors gegeben und somit ein rotierendes Statormagnetfeld erzeugt. Der Rotor des Elektromotors weist oftmals einen oder mehrere Permanentmagnete auf, durch welche ein statisches Rotormagnetfeld erzeugt wird. Aus der Wechselwirkung des Statormagnetfelds mit dem Rotormagnetfeld resultiert ein Drehmoment, welches den Rotor in Bewegung versetzt.

Die Umrichterschaltung des EC-Motors steuert die Phasen des Drehstromnetzes in Abhängigkeit von der Position des Rotors an, die meist messtechnisch bestimmt werden muss. Für die Positionsermittlung, insbesondere die Drehwinkelermittlung, des Rotors sind häufig Sensoren, wie z.B. Hallsensoren, Reed-Sensoren o.ä. vorgesehen, die das Rotormagnetfeld direkt messen. Oftmals und nicht zuletzt aus Kostengründen werden alternativ hierzu sensorlose Drehwinkelgeber zur Positionserfassung des Rotors eingesetzt. Hierbei wird die so genannte gegenelektromotorische Kraft (Gegen-EMK oder auch Gegen-EMF genannt) des Elektromotors, also die durch das drehende Rotormagnetfeld in die Statorspulen induzierte Spannung, zur Positionsermittlung gemessen. Motoren dieser Bauart werden als bürstenlose, sensorlose Elektromotoren bezeichnet.

Nachteilig bei den sensorlosen Drehwinkelgebern ist, dass die Gegen-EMK in der Regel nur in einer Motorphase gemessen werden kann, die während der Messdauer stromlos ist. Für die Messung der Gegen-EMK wird daher während eines Vollzyklus der Kommutierung (die bei einem 1-paarpoligen Synchronmotor einem 360°-vollzyklus der Rotordrehung entspricht) eine Anzahl von Messwinkeln oder Messbereichen vorgesehen, innerhalb derer die betreffende Phase stromlos gehalten wird. Durch den oder jeden Messwinkel wird andererseits die maximale Größe und Position des Ansteuerwinkels eingeschränkt, der aufgrund dieser Einschränkung im Allgemeinen den theoretisch möglichen Maximalwinkel von 180° deutlich unterschreitet. Mit Ansteuerwinkel wird derjenige Teil des Vollzyklusses bezeichnet, während dessen die oder jede Phase schaltungstechnisch angesteuert, d.h. erregt ist. Meist werden Ansteuerwinkel zwischen 120° und 150° verwendet. Eine Vergrößerung des Ansteuerwinkels führt in der Regel zu einer Vergrößerung der Leistung und des Wirkungsgrades des Elektromotors, so dass die Erreichung möglichst großer Ansteuerwinkel oft erwünscht ist.

Herkömmlicherweise werden bei einer Kommutierung die Phasen eines Elektromotors zueinander symmetrisch, d.h. in gleicher Weise angesteuert. Insbesondere werden hierbei für alle Motorphasen Ansteuerwinkel und Messwinkel in gleicher Weise eingestellt. Zudem sind bei bipolarer Kommutierung eines Elektromotors auch die beiden Ansteuerwinkel, die der positiven und negativen Ansteuerung derselben Motorphase während des Vollzyklus entsprechen, herkömmlicherweise symmetrisch gewählt, wobei alternierend zwischen den beiden Ansteuerwinkeln zwei gleiche Messwinkel vorgesehen sind.

Für eine sinusförmige Kommutierung ist andererseits aus US 5,969,491 A bekannt, in der zeitlichen Umgebung eines Nulldurchgangs einer Phasenspannung vorübergehend abzuklemmen, so dass zwischen den angrenzenden Halbwellen der Phasenspannung ein Zeitfenster gebildet ist, in dem der Nulldurchgang der Gegen-EMK gemessen werden kann. Das Zeitfenster kann in nur einer Motorphase vorgesehen sein. Ebenso kann das Zeitfenster in der jeweiligen Motorphase nur einmal pro Vollzyklus vorgesehen sein. In diesen Ausführungen des bekannten Kommutierungsverfahrens wird somit eine Motorphase bezüglich der weiteren Motorphasen bzw. bezogen auf sich selbst asymmetrisch angesteuert.

Es ist üblich, die Motorphasen mit dem Nulldurchgang der Gegen-EMF in der entsprechenden Motorphase zu kommutieren. Um eine höhere Leistung aus einem Motor zu erhalten, kann mit positiver Vorzündung gearbeitet werden. Hierbei wird nicht der Nulldurchgang der induzierten Spannung als Trigger- oder Startsignal für den Ansteuerwinkel detektiert. Vielmehr wird die Gegen-EMK mit einer von Null verschiedenen Vergleichsspannung (insbesondere UL > 0V bei fallender Gegen-EMK) verglichen. Die Vergleichsspannung muss allerdings kleiner als die Zwischenkreisspannung sein, da die induzierte Spannung durch die Umrichterschaltung systembedingt auf den Betrag der Zwischenkreisspannung begrenzt wird. Diese Einschränkung führt zu einer Begrenzung des maximal einstellbaren Vorzündungswinkels und somit wiederum zu einer Leistungsbeschränkung für den Motor.

Der Erfindung liegt die Aufgabe zugrunde, ein Verfahren zur Kommutierung der Motorphasen eines Elektromotors mit jeweils eines kanstanten Spannung in einem Ansteuerwinkel anzugeben, das mit einfachen und preisgünstigen Mitteln die Erzielung einer besonders hohen Motorleistung ermöglicht.

Diese Aufgabe wird erfindungsgemäβ durch ein Verfahren mit den Merkmalen des Anspruchs 1 gelöst. Erfindungsgemäß wird ein Verfahren zur Kommutierung der Motorphasen eines bürstenlosen und sensorlosen Elektromotors mit jeweils eines kanstanten Spannung in einem Ansteuerwinkel vorgeschlagen, bei welchem die Ansteuerung der Motorphasen asymmetrisch erfolgt.

Erfindungsgemäß werden zwei unabhängig voneinander oder in Kombination einsetzbare Varianten vorgeschlagen, die diese Asymmetrie umzusetzen. Gemäß der ersten Variante sind verschiedene Motorphasen zueinander asymmetrisch angesteuert, indem ein Ansteuerwinkel einer Motorphase bezüglich eines entsprechenden Ansteuerwinkels mindestens einer anderen Motorphase verkürzt angesteuert wird, um einen vor- oder nachgeordneten Messwinkel hinreichender Größe zu schaffen. Die Gegen-EMK wird somit nur in einem Teil der Motorphasen, bevorzugt nur in einer einzigen Motorphase detektiert, während für die anderen Motorphasen der Ansteuerwinkel unabhängig von den durch die Gegen-EMK-Messung auferlegten Einschränkungen, und somit insbesondere im Rahmen der technischen Möglichkeiten optimiert gewählt werden kann.

Gemäß der zweiten Variante wird bei bipolarer Motoransteuerung eine Motorphase, bezogen auf sich selbst, asymmetrisch angesteuert, indem von den beiden auf den Vollzyklus verteilten Ansteuerwinkeln, die der positiven bzw. negativen Halbwelle der Ansteuerung entsprechen, ein Ansteuerwinkel gegenüber dem anderen Ansteuerwinkel verkürzt angesteuert wird, um wiederum einen vor- bzw. nachfolgenden Messwinkel freizuhalten. In einem Spezialfall ist eine solche asymmetrische Kommutierung auch realisiert, indem zwei einer Phase zugeordnete Ansteuerwinkel gleicher Größe unsymmetrisch auf dem Vollzyklus angeordnet werden, so dass zwischen diesen Ansteuerwinkeln ein größerer Zwischenwinkel (Messwinkel) und ein kleiner Zwischenwinkel gebildet sind.

Der unter Berücksichtigung des Messwinkels verkürzte Ansteuerwinkel ist nachfolgend als "Messansteuerwinkel", der demgegenüber unverkürzte Ansteuerwinkel als "Leistungsansteuerwinkel" bezeichnet. Innerhalb des Messwinkels ist die betreffende Motorphase - wie bei herkömmlichen Kommutierungsverfahren - für eine Positionsbestimmung der Rotorlage durch Messung der Gegen-EMK stromlos geschaltet.

Die Erfindung geht dabei von der Überlegung aus, dass es nicht notwendig ist, die durch die sensorlose Positionsbestimmung der Rotorlage zwangsweise auferlegte Einschränkung hinsichtlich der Wahl des Vorzündungswinkels und des Ansteuerwinkels auf alle anderen Phasen und Kommutierungsteilzyklen zu übertragen. Vielmehr ist es ausreichend, dass nur einzelne Ansteuerwinkel in der Größe verringert werden, um punktuell eine Positionsbestimmung zu ermöglichen, während alle oder einige der verbleibenden Ansteuerwinkel einen betragsmäßig größeren Winkelbereich aufweisen.

Insgesamt führt die erfindungsgemäß asymmetrische Motoransteuerung zu einem höheren Wirkungsgrad und höherer Leistung des Elektromotors, da durch die lediglich punktuell verkürzten Ansteuerwinkel die Netto-Kommutierungszeit während des Vollzyklus gegenüber herkömmlichen Kommutierungsverfahren signifikant erhöht wird. Gleichzeitig kann durch das erfindungsgemäße Verfahren der Motor so ausgelegt werden, dass eine Verringerung der Belastung für die Pufferkondensatoren erreicht und die EMV-Eigenschaften verbessert werden.

Ähnliche Vorteile konnten bei Elektromotoren, wie sie aus dem Stand der Technik bekannt sind, bisher nur durch den Einsatz von hochwertigeren und somit teureren Komponenten (dickere Kupferdrähte, bessere MOSFets, bessere Magnete, bessere Pufferkondensatoren, bessere Filter) erreicht werden.

Zweckmäßigerweise beträgt die Größe des Messansteuerwinkels 120° bis 150° und entspricht damit der Größe eines Ansteuerwinkels, wie er aus dem Stand der Technik bei bauartgleichen Elektromotoren bekannt ist. Der Leistungsansteuerwinkel weist dagegen zweckmäßigerweise eine Größe von 155° bis zu annähernd 180° auf. Diese Größe wird dadurch erreicht, dass der Leistungsansteuerwinkel den oben beschriebenen Messwinkel zumindest teilweise mit umfasst.

Bei einer bevorzugten Ausbildung des Verfahrens wird nur eine einzige Phase mit einem Messansteuerwinkel kommutiert, so dass während des Vollzyklusses nur eine einzige Positionsinformation über die Rotorlage erfasst wird.

Um - sofern dies für den speziellen Anwendungsfall erforderlich oder zweckmäßig ist - die Asymmetrie der Phasen gering zu halten, ist alternativ hierzu (bei bipolarer Ansteuerung) vorgesehen, dass jede Phase mit einem Messansteuerwinkel und einem Leistungsansteuerwinkel pro Vollzyklus kommutiert wird, wobei alle Leistungsansteuerwinkel entweder nur den unteren oder nur den oberen Halbwellen der bipolaren Ansteuerung zugeordnet sind. Anders ausgedrückt werden alle positiven Halbwellen der Phasen mit Messansteuerwinkeln und alle negativen Halbwellen mit Leistungsansteuerwinkel kommutiert. Alternativ sind bei der Zuordnung positive und negative Halbwellen vertauscht. Diese Ausbildung birgt den Vorteil, dass zumindest 50% der Halbwellen optimal genutzt sind und die Phasen zeitversetzt kongruent - also deckungsgleich - zueinander sind. Dagegen liegt nun eine Asymmetrie innerhalb einer jeden Phase vor, da negative und positive Halbwelle nicht in gleicher Weise kommutiert werden.

Um die Leistung und den Wirkungsgrad des Elektromotors weiter zu verbessern , wird der Motor mit Vorzündung betrieben. Es ist vorgesehen, dass nur ein Teil der Ansteuerwinkel als Messansteuerwinkel und ein anderer Teil als Leistungsansteuerwinkel ausgebildet sind.

Die mit der Erfindung erzielten Vorteile bestehen also insbesondere darin, dass die Einschränkungen in der Wahl der Ansteuerwinkel, die durch eine Positionserkennung der Rotorlage bedingt ist, nicht auf alle Phasen bzw. Halbwellen übertragen werden, indem der Elektromotor unsymmetrisch betrieben wird. Dadurch kann im Durchschnitt ein gegenüber herkömmlichen Verfahren erhöhter Ansteuerwinkel und Vorzündungswinkel, und dadurch wiederum eine besonders hohe Motorleistung erzielt werden.

Nachfolgend werden Ausführungsbeispiele der Erfindung anhand einer Zeichnung näher erläutert. Darin zeigen:
- FIG 1: ein Blockschaltbild eines bürstenlosen und sensorlosen Elektromotors mit Umrichterschaltung zur Durchführung des erfindungsgemäßen Verfahrens,
- FIG 2: ein Diagramm zur Illustrierung einer herkömmlichen symmetrischen Kommutierung,
- FIG 3: ein Diagramm zur Illustrierung einer unsymmetrischen Kommutierung als erstes Ausführungsbeispiel der Erfindung,
- FIG 4: ein Diagramm zur Illustrierung einer herkömmlichen symmetrischen Kommutierung mit Vorzündung,
- FIG 5: ein Diagramm zur Illustrierung des Spannungs- und Stromverlaufs bei der Abkommutierung einer Phase, und
- FIG 6: ein Diagramm zur Illustrierung einer unsymmetrischen Kommutierung mit Vorzündung als zweites Ausführungsbeispiel der Erfindung.

Einander entsprechende Teile und Größen sind in allen Figuren stets mit denselben Bezugszeichen versehen.

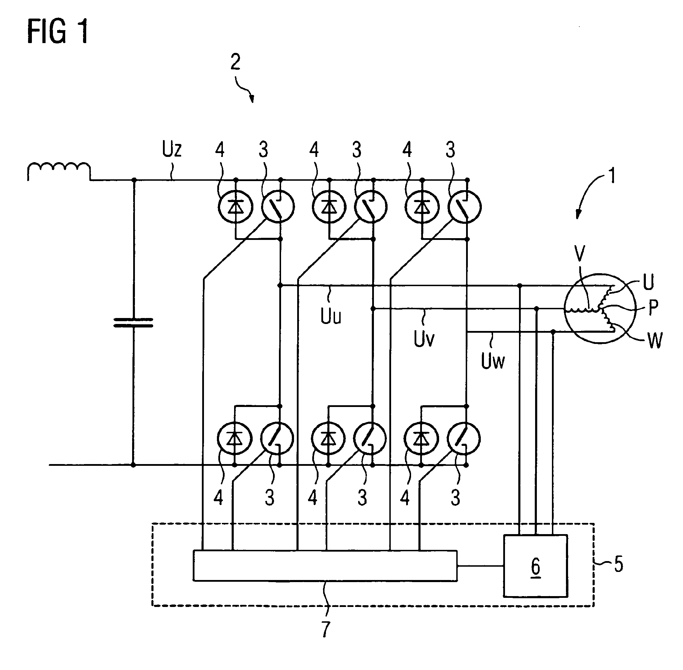

Die FIG 1 zeigt ein Blockschaltbild eines bürstenlosen, sensorlosen Elektromotors 1 sowie eine Umrichterschaltung 2, die dem Elektromotor 1 als Energieversorgung zugeordnet ist. Der dargestellte Elektromotor 1 ist dreiphasig und bipolar angesteuert. Das erfindungsgemäße Verfahren ist aber auch bei u-nipolaren Motoren, bei Motoren mit anderer Phasenzahl oder bei Motoren, deren Wicklungen im Dreieck geschaltet sind, anwendbar.

Der in FIG 1 dargestellte Motor 1 umfasst drei Motorphasen U, V und W (nachfolgend kurz Phasen U,V,W) in Sternschaltungsanordnung. Jede Phase U,V,W umfasst eine im Stator des Motors 1 angeordnete Ankerwicklung, die an eine zugehörige Halbbrücke der Umrichterschaltung 2 angeschlossen ist. Die Ankerwicklungen der Phasen U,V,W sind andererseits in einem gemeinsamen Sternpunkt oder Mittelpunkt P zusammengeschlossen. Jede Wicklung U, V, W kann zur Zuführung einer Zwischenkreisspannung Uz über Schaltelemente 3 der zugehörigen Halbbrücke der Umrichterschaltung 2, die vorzugsweise als MOSfets ausgebildet sind, mit einem Zwischenkreis der Umrichterschaltung 2 leitend verbunden werden. Jedem Schaltelement 3 der Umrichterschaltung 2 ist eine Freilaufdiode 4 parallelgeschaltet.
Die Schaltelemente 3 werden von einer Steuereinheit 5 in Abhängigkeit der Rotorstellung des Motors 1 derart angesteuert, dass von den Ankerwicklungen der Phasen U, V, W ein rotierendes Magnetfeld zum Antrieb des Motors 1 erzeugt wird. Die Rotorstellung wird von einem Detektor 6 der Steuereinheit 5 durch Messung der gegenelektromotorischen Kraft ermittelt. Der Detektor 6 gibt ein die Rotorstellung anzeigendes Triggersignal an einen Kommutierungsgenerator 7 der Steuereinheit 5 ab, anhand dessen der Kommutierungsgenerator 7 wiederum die Schaltelemente 3 ansteuert.

Der Rotor des Motors 1 ist vorzugsweise mit Permanentmagneten ausgestattet. Die Messung der gegenelektromotorischen Kraft erfolgt in einer oder mehreren der Phasen U,V,W, die für diese Messung jeweils stromlos geschaltet ist.

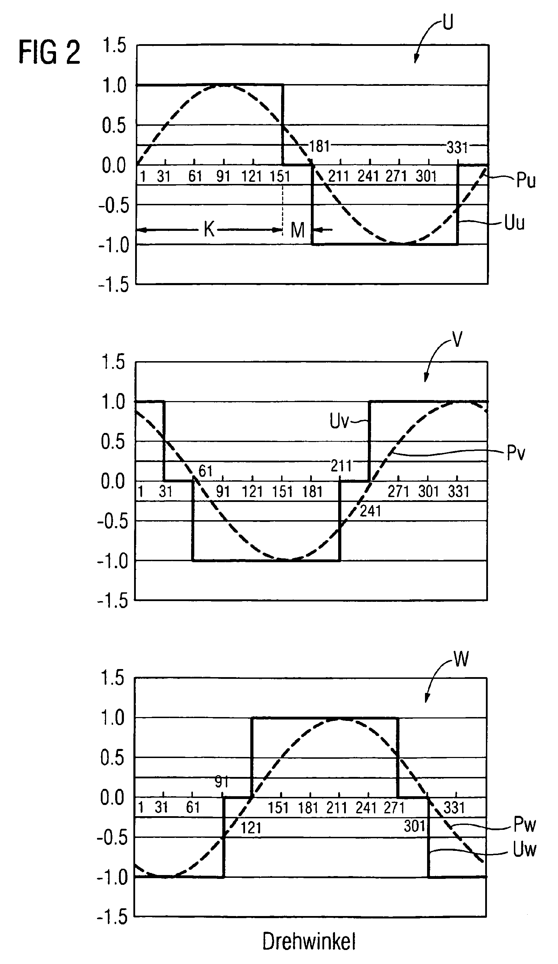

FIG 2 illustriert eine symmetrische Kommutierung des Motors 1, wie sie herkömmlicherweise eingesetzt wird, anhand von drei übereinander angeordneten Einzeldiagrammen, in denen die Kommutierung der Phasen U,V,W durch Auftragung der jeweiligen (vereinfacht dargestellten) Phasenspannung Uu bzw. Uv bzw. Uw über den Drehwinkel des Motors 1 verdeutlicht ist. In die Einzeldiagramme gemäß FIG 2 ist ferner für jede Phase U,V,W ein Phasenanteil Pu bzw. Pv bzw. Pw gestrichelt eingetragen, der eine zu der in die jeweilige Phase U,V,W induzierten Gegen-EMK proportionale Größe und somit ein Maß für die Rotorstellung in Bezug auf die Ankerwicklung der jeweiligen Phase U,V,W darstellt.

Die Rotorstellung (repräsentiert durch die Ausrichtung des Rotormagnetfelds) ist dabei jeweils bei einem Nullgang des Phasenanteils Pu,Pv,Pw parallel oder antiparallel zu der zugehörigen Phase U,V,W ausgerichtet. Der Nulldurchgang des Phasenanteils Pu,Pv,Pw geht daher einher mit einem Vorzeichenwechsel der Gegen-EMK in die entsprechende Phase U,V,W, der messtechnisch von dem Detektor 6 erfasst wird.

Bei dem herkömmlichen Kommutierungsverfahren gemäß FIG 2 wird die Rotorstellung bei jedem Vorzeichenwechsel der Gegen-EMK in der Phase U von positiv auf negativ detektiert. Im dargestellten Beispiel findet dieser Wechsel bei einem Drehwinkel von 180° statt, wie dem oberen Einzeldiagramm der FIG 2 zu entnehmen ist.

Zumal die Messung der Gegen-EMK eine gewisse Messzeit erfordert, kann die Positionsermittlung der Rotorlage nicht punktuell bei einem Drehwinkel von 180° erfolgen. Vielmehr schließt die Messung der Gegen-EMK einen von Null verschiedenen Messwinkel M ein, um den sich der Rotor während der Messzeit weiterdreht. Für Filter, Beschleunigungsreserve etc. wird insbesondere ein Drehwinkelintervall von ca. 20° benötigt. Für den Abbau des Freilaufstroms werden etwa weitere 10° benötigt, so dass für den Messwinkel M etwa ein Drehwinkelintervall von 30° zu veranschlagen ist.

Für die Phase U erstrecken sich gemäß dem oberen Einzeldiagramm der FIG 2 der zu veranschlagende Messwinkel auf einen Drehwinkelbereich zwischen 150° und 180°. Somit muss der Beginn der Messung spätestens bei einem Drehwinkel von 150° erfolgen. Da die Messung nur bei unbestromter Phase U möglich ist, muss die Phase U bei 150° abkommutiert werden. Der Messwinkel M begrenzt somit zwangsweise den vorausgehenden Ansteuerwinkel K, d.h. das Drehwinkelintervall, innerhalb dessen die Phase U (bzw. V oder W) angesteuert ist, auf ein Drehwinkelintervall von beispielsweise maximal 150°.

Die Ansteuerwinkel K sind bei dem in FIG 2 illustrierten symmetrischen Kommutierungsverfahren für alle Phasen U,V,W einheitlich gewählt. Zudem ist auch innerhalb einer jeden Phase U,V,W sowohl für die positive als auch die negative Halbwelle der bipolaren Ansteuerung ein einheitlicher Ansteuerwinkel K gewählt. Beispielsweise beträgt der Ansteuerwinkel K für jede Phase und für jede Halbwelle maximal 150°, wobei jede Phase U,V,W zwischen den beiden Kommutierungsteilzyklen um ein dem Messwinkel M entsprechendes Drehwinkelintervall abkommutiert wird.

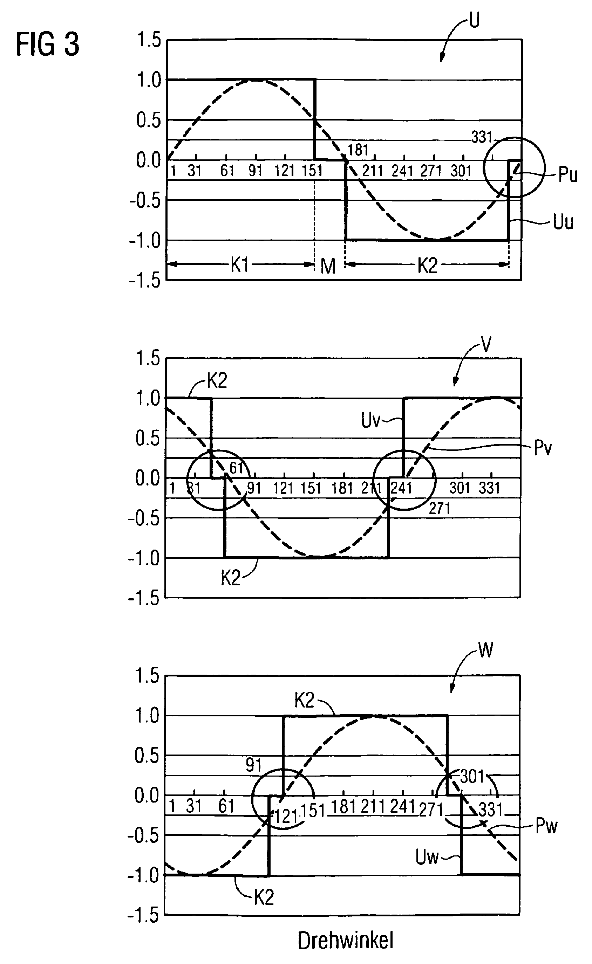

FIG 3 zeigt ein Diagramm zur Illustrierung einer asymmetrischen Kommutierung als erstes Ausführungsbeispiel der Erfindung. Das in FIG 3 dargestellte Diagramm ist analog zu FIG 2 aufgebaut und besteht ebenfalls aus drei Einzeldiagrammen, die den jeweiligen Phasen U,V,W zugeordnet sind.

Im Unterschied zu dem herkömmlichen Kommutierungsverfahren ist gemäß FIG 3 nur nach einem der positiven Ansteuerung der Phase U entsprechenden Ansteuerwinkel K1 ein Messwinkel M vorgesehen, wodurch dieser (nachfolgend als Messansteuerwinkel K1 bezeichnete) Ansteuerwinkel K1 betragsgemäß dem bei symmetrischer Kommutierung erreichbaren Ansteuerwinkel K entspricht, insbesondere auf einen Maximalbetrag von etwa 150° beschränkt ist.

Der der negativen Ansteuerung der Phase U entsprechende Ansteuerwinkel K2 sowie die den Phasen V und W zugeordneten Ansteuerwinkel K2 sind dagegen unabhängig von dem Messansteuerwinkel K1 gewählt. Bei der Bestimmung dieser (nachfolgend als Leistungsansteuerwinkel K2 bezeichneten) Ansteuerwinkel K2 ist kein begrenzender Messwinkel berücksichtigt, so dass die Ansteuerwinkel K2 bis auf annähernd 180° ausgedehnt werden können.

Mit anderen Worten ist der Messansteuerwinkel K1 bei entsprechend hoher Leistungsanforderung an den Motor 1 gegenüber den Leistungsansteuerwinkeln K2 betragsmäßig verkürzt. Die Phase U ist somit sowohl in sich als auch gegenüber den weiteren Phasen V und W asymmetrisch angesteuert. In FIG 3 ist dieser Fall verdeutlicht. Während der Messansteuerwinkel K1 den durch die Freihaltung des Messwinkels M bedingten Maximalbetrag von z.B. etwa 150° einnimmt, ist den Leistungsansteuerwinkeln K2 ein demgegenüber erhöhter Betrag von z.B. 165° zugeordnet.

Falls die Unsymmetrie der Phase U zu den anderen Phasen V und W nicht akzeptabel ist, werden bei einer Abwandlung des erfindungsgemäßen Verfahrens die Leistungsansteuerwinkel K2 auf die negativen Halbwellen aller Phasen U,V,W angewandt, während die positiven Halbwellen der Phasen U, V, W mit verkürzten Messansteuerwinkeln K1 kommutiert werden. Damit sind 50% der Halbwellen optimal ausgenutzt, und die Phasen sind im Bezug aufeinander symmetrisch, d.h. zeitversetzt deckungsgleich. Die Asymmetrie der Ansteuerung äußert sich bei dieser Abwandlung in einer unterschiedlichen Ansteuerung der oberen Halbwellen in Bezug auf die unteren Halbwellen innerhalb einer jeden Phase U,V,W.

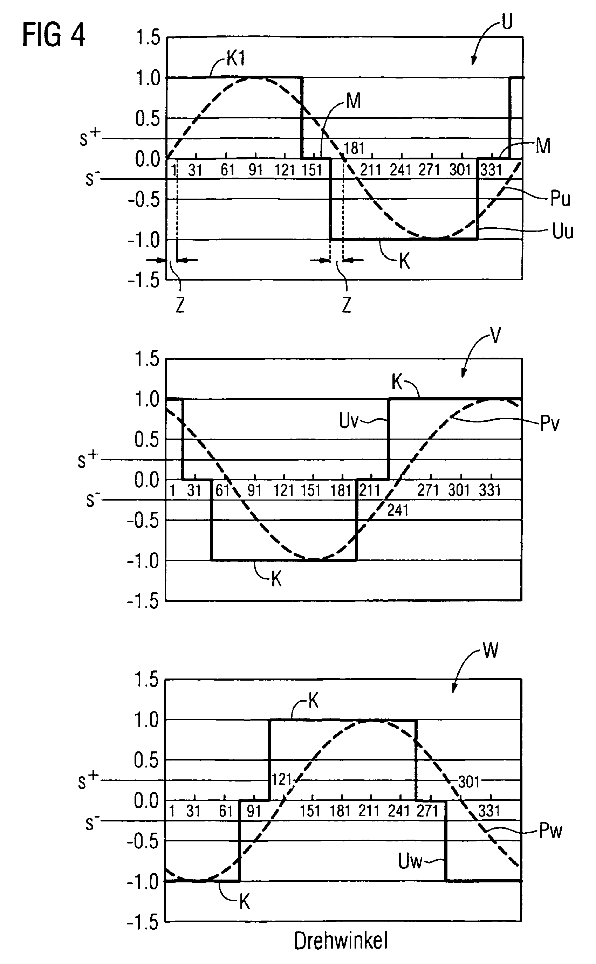

FIG 4 zeigt ein Diagramm zur Veranschaulichung einer wiederum herkömmlichen symmetrischen Kommutierung des Motors 1 mit Vorzündung. Das in FIG 4 dargestellte Diagramm ist wiederum analog zu den FIG 2 und 3 ausgeführt.

Wie in der FIG 4 dargestellt ist, fällt bei einer Kommutierung mit Vorzündung der Beginn des Ansteuerwinkels K nicht mit dem Nulldurchgang des zugehörigen Phasenanteils Pu,Pv,Pw zusammen. Vielmehr ist der Ansteuerwinkel K gegenüber dem Nulldurchgang des Phasenanteils Pu,Pv,Pw vorverschoben. Mit anderen Worten erfolgt die Ansteuerung der Phasen U,V,W bereits, wenn die zugehörige Gegen-EMK beim Abklingen gegen Null einen von Null verschiedenen Vergleichswert S⁺,S⁻ überschreitet. Für die positiven Halbwellen der Phasenansteuerung wird ein positiver Vergleichswert S⁺, für die negativen Halbwellen entsprechend ein negativer Vergleichswert S⁻ herangezogen.

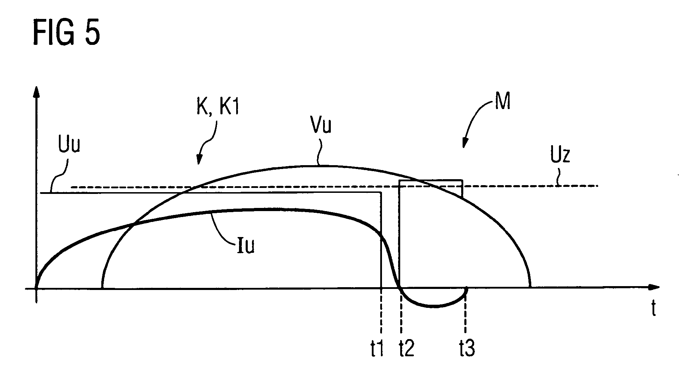

Aufgrund der nur in stromlosem Zustand möglichen Rotorlageerkennung ist bei symmetrischer Motoransteuerung gemäß FIG 4 eine Vorzündung nur in einem vergleichsweise eingeschränkten Maß möglich, wie nachfolgend anhand von FIG 5 näher erläutert wird:
In FIG 5 ist in einem schematisierten Diagramm gegen die Zeit t beispielhaft für die Phase U der Verlauf der Phasenspannung Uu und des zugehörigen Phasenstroms Iu dargestellt. In das Diagramm sind weiterhin der Verlauf der in die Phase U induzierten Gegen-EMK Vu sowie (gestrichelt) die während des Kommutierungsvorgangs konstante Zwischenkreisspannung ZUz eingetragen.

Bis zu einem Zeitpunkt t1 ist die Phase U mit dem Zwischenkreis verbunden, also positiv erregt. Die Phasenspannung Uu ist bis zu dem Zeitpunkt t1 konstant und unterschreitet die Zwischenkreisspannung Uz um einen geringen Betrag, der der Flussspannung des zwischengeschalteten Schaltelements 3 entspricht. Der Phasenstrom Iu wird zunächst größer, durchläuft ein Maximum und nimmt bis zum Zeitpunkt t1 sogar etwas ab.

Im Zeitpunkt t1 wird die betrachtete Phase U abkommutiert. Hierzu wird die Phase U während eines gemäß FIG 5 bis zum Zeitpunkt t2 dauernden Abkommutierungszeitraums zunächst umgepolt, insbesondere auf negatives Zwischenkreispotential geschaltet, wodurch die Phasenspannung Uu zusammenbricht und der Phasenstrom Iu schnell abklingt. Zum Zeitpunkt t2, an dem der Phasenstrom Iu abgeklungen ist, wird die Phase U von dem Zwischenkreis abgeklemmt, um die Gegen-EMK Vu zu messen.

Überschreitet zum Zeitpunkt t2 die Gegen-EMK Vu die Zwischenkreisspannung U_{Z}, was insbesondere bei großer Vorzündung möglich ist, wird durch die Gegen-EMK Vu ein Stromfluss in der Phase U aufgebaut, der über die obere Freilaufdiode 4 in den Zwischenkreis abfließt. Die Phasenspannung Um nimmt konsequenterweise einen Wert an, der die Zwischenkreisspannung Uz um den der Flussspannung der Freilaufdiode 4 entsprechenden Betrag übersteigt. Erst wenn die Gegen-EMK Vu die Zwischenkreisspannung unterschritten hat und der hierdurch verursachte Motorstrom Iu abgeklungen ist - nämlich zu einem Zeitpunkt t3 - ist die Gegen-EMK Vu für den Detektor 6 "sichtbar", d.h. betragsmäßig messbar, und kann zur Positionserkennung der Rotorlage genutzt werden.

Zumal eine Weiterkommutierung erst erfolgen kann, nachdem die Positionsbestimmung der Rotorlage durchgeführt worden ist, kann die Vorzündung somit frühestens zum Zeitpunkt t3 eingesetzt werden, wodurch der maximal einstellbare Vorzündwinkel begrenzt ist.

Bei der herkömmlichen symmetrischen Ansteuerung des Motors 1 gemäß FIG 4 wirkt sich diese Einschränkung des Vorzündwinkels zwangsläufig auf alle Phasen U,V,W und jeden Kommutierungsteilzyklus innerhalb einer jeden Phase U,V,W aus.

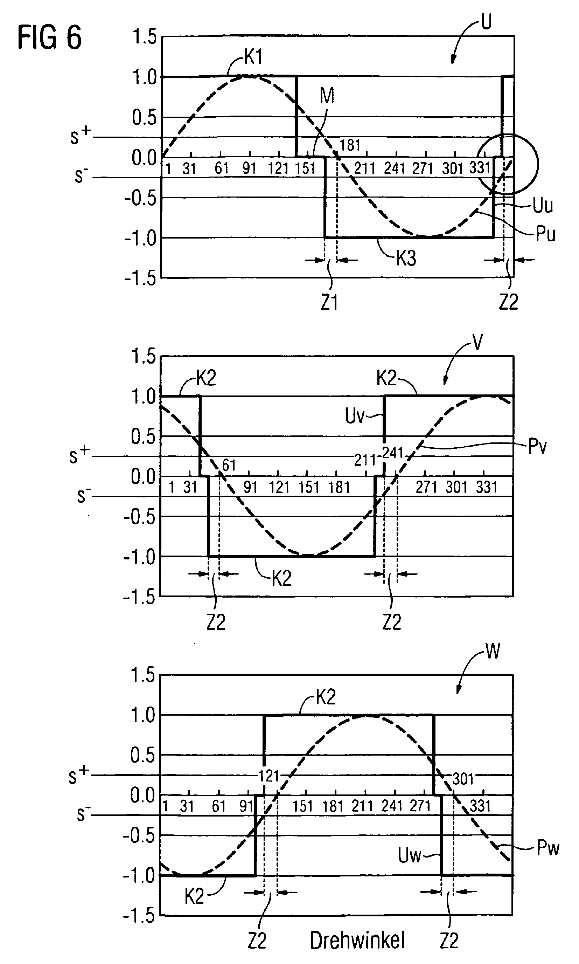

Bei Einsatz von Vorzündung im Rahmen des erfindungsgemäßen unsymmetrischen Kommutierungsverfahrens, wie es in zu FIG 4 analoger Darstellungsweise in FIG 6 dargestellt ist, unterliegt nur der auf einen Messwinkel M folgende Ansteuerwinkel der vorstehend beschriebenen Einschränkung hinsichtlich des zugeordneten Vorzündwinkels Z1. In FIG 6 betrifft dies ausschließlich den auf den Messansteuerwinkel K1 der Phase U folgenden zweiten (Mess-) Ansteuerwinkel K3, der infolge dieser Einschränkung ebenfalls gegenüber den Leistungsansteuerwinkeln K2 der Phasen V und W verkürzt sein kann.

Die übrigen fünf Kommutierungsteilzyklen, entsprechend dem Messansteuerwinkel K1 der Phase U sowie den Leistungsansteuerwinkeln K2 der Phasen V und W, können demgegenüber vorverlegt sein, d.h. mit einem größeren Vorzündwinkel Z2 betrieben werden. Insbesondere wird der Messwinkel M gemäß FIG 6 geschaffen, indem der Messansteuerwinkel K1 der Phase U am "hinteren Ende" und der folgende (Mess-) Ansteuerwinkel K3 am "vorderen Ende" abgeschnitten werden. Beispielsweise ist Z2 um bis zu 10° größer als Z1. Die Differenz kann aber bei anderen Ausführungen 30° und mehr betragen. Der Unterschied kann vor allem dann sehr groß sein, wenn die Positionserkennung nur im Nulldurchgang der Gegen-EMK erfolgen kann.

## Patentansprüche

1. Verfahren zur Kommutierung der Motorphasen (U, V, W) eines mehrphasigen Elektromotors (1) mit jeweils einer konstanten Spannung in einem Ansteuerwinkel,
- bei welchem während eines Vollzyklus mindestens eine Motorphase (U) bezüglich einer weiteren Motorphase (V, W) asymmetrisch angesteuert wird, indem ein Ansteuerwinkel (K1, K3) der einen Motorphase (U) bezüglich eines entsprechenden Ansteuerwinkels (K2) der anderen Motorphase (V, W) verkürzt angesteuert wird, und/oder
- bei welchem während eines Vollzyklus mindestens eine Motorphase (U, V, W), bezogen auf sich selbst, asymmetrisch angesteuert wird, indem ein Ansteuerwinkel (K1) bezüglich eines vorausgehenden oder folgenden Ansteuerwinkels (K2) verkürzt angesteuert wird und/oder indem zwischen zwei Ansteuerwinkeln unterschiedlich große Zwischenwinkel vorgesehen sind,
wobei dem verkürzten Ansteuerwinkel (K1) ein Messwinkel (M) vor- oder nachgeordnet ist, innerhalb dessen die betreffende Motorphase (U) für eine Rotorstellungsdetektion durch Messung der gegenelektromotorischen Kraft (Vu) stromlos geschaltet wird,
wobei der verkürzte Ansteuerwinkel (K1) von 120° bis zu 150° beträgt und der entsprechende unverkürzte Ansteuerwinkel (K2) von 155° bis zu annähund 180° beträgt,
wobei der Elektromotor (1) derart mit Vorzündung betrieben wird, dass die Vorzündung einer jeweiligen Motorphase (U,V,W) ausgelöst wird, wenn die zu der jeweiligen Motorphase (U,V,W) zugehörige gegenelektromotorische Kraft (Vu) beim Abklingen gegen Null einen von Null verschiedenen Vergleichswert (S⁺, S⁻) überschreitet, wobei für die positiven Halbwellen der Phasenansteuerung ein positiver Vergleichswert (S⁺) und für die negativen Halbwellen ein negativer Vergleichswert (S⁻) herangezogen wird.

2. Kommutierungsverfahren nach Anspruch 1,
**dadurch gekennzeichnet, dass** pro elektrischem Vollzyklus genau ein Ansteuerwinkel (K1) verkürzt angesteuert wird.

3. Kommutierungsverfahren nach Anspruch 1,
**dadurch gekennzeichnet, dass** bei bipolarer Kommutierung des Elektromotors (1) pro Vollzyklus jede Motorphase (U, V, W) mit genau einem unverkürzten Ansteuerwinkel (K2) angesteuert wird, wobei entweder nur die den unteren oder nur die den oberen Halbwellen der bipolaren Ansteuerung zugeordneten Ansteuerwinkel (K1) verkürzt sind.

4. Kommutierungsverfahren nach Anspruch 1,
**dadurch gekennzeichnet, dass** bei bipolarer Kommutierung beide Ansteuerwinkel (K1, K3) einer Phase (U) verkürzt gegenüber den entsprechenden Ansteuerwinkeln (K2) der oder jeden anderen Phase (V, W) angesteuert sind.

## Claims

1. Method for the commutation of the motor phases (U, V, W) of a multi-phase electric motor (1) each having a constant voltage in a control angle,
- in which during one full cycle at least one motor phase (U) is controlled asymmetrically with respect to a further motor phase (V, W), in that a control angle (K1, K3) of one motor phase (U) is controlled in a shortened manner with respect to a corresponding control angle (K2) of the other motor phase (V, W), and/or
- in which during one full cycle at least one motor phase (U, V, W) is controlled asymmetrically with respect to itself, in that a control angle (K1) is controlled in a shortened manner with respect to a previous or subsequent control angle (K2) and/or in that intermediate angles of different sizes are provided between two control angles,
wherein the shortened control angle (K1) is preceded or followed by a measurement angle (M) within which the relevant motor phase (U) is switched at zero current for detecting a rotor position by measuring the counter-electromotive force (Vu),
wherein the shortened control angle (K1) is from 120º to 150º and the corresponding non-shortened control angle (K2) is from 155º to approximately 180º,
wherein the electric motor (1) is operated with advanced ignition such that the advanced ignition of a respective motor phase (U, V, W) is triggered when the counter-electromotive force (Vu) appertaining to the respective motor phase (U, V, W) and decreasing towards zero exceeds a non-zero comparison value (S⁺, S⁻) wherein a positive comparison value (S⁺) is used for the positive half-waves of the phase control and a negative comparison value (S⁻) is used for the negative half-waves.

2. Commutation method as claimed in Claim 1, **characterised in that** precisely one control angle (K1) is controlled in a shortened manner for each full electrical cycle.

3. Commutation method as claimed in Claim 1, **characterised in that** in the case of bi-polar commutation of the electric motor (1), each motor phase (U, V, W) is controlled with precisely one non-shortened control angle (K2) for each full cycle, wherein either only the control angles (K1) allocated to the lower half-waves of the bi-polar control or only the control angles (K1) allocated to the upper half-waves of the bi-polar control are shortened.

4. Commutation method as claimed in Claim 1, **characterised in that** in the case of bi-polar commutation, the two control angles (K1, K3) of one phase (U) are controlled in a shortened manner with respect to the corresponding control angles (K2) of the or each other phase (V, W).

## Revendications

1. Procédé pour commuter les phases (U, V, W) d'un moteur électrique (1) polyphasé à une tension constante respective dans un angle de commande,
- dans lequel au cours d'un cycle complet au moins une phase (U) est commandée asymétriquement par rapport à une autre phase (V, W) en ce qu'un angle de commande (K1, K3) de l'une des phases (U) par rapport à un angle de commande (K2) correspondant de l'autre phase (V, W) est commandé de manière réduite et/ou
- dans lequel au cours d'un cycle complet au moins une phase (U, V, W) est commandée asymétriquement par rapport à elle-même en ce qu'un angle de commande (K1) est commandé de manière réduite par rapport à un angle de commande (K2) précédent ou suivant et/ou en ce que des angles intermédiaires de grandeur différente sont prévus entre deux angles de commande,
un angle de mesure (M) étant placé avant ou après l'angle de commande (K1) réduit, à l'intérieur de cet angle de mesure la phase de moteur (U) correspondante est commutée hors tension pour détecter une position de rotor en mesurant la force contre-électromotrice (Vu),
l'angle de commande (K1) réduit étant compris entre 120° et 150° et l'angle de commande (K2) non réduit correspondant étant compris entre 155° et approximativement 180°,
le moteur électrique (1) fonctionnant en préallumage de telle manière que le préallumage d'une phase (U, V, W) est déclenché quand la force contre-électromotrice (Vu) qui correspond à la phase de moteur (U, V, W) en question dépasse une valeur de comparaison (S⁺, S⁻) différente de zéro quand elle tend vers zéro, en utilisant une valeur de comparaison (S⁺) positive pour la demi-onde positive de l'excitation de phase et une valeur de comparaison (S⁻) négative pour la demi-onde négative.

2. Procédé de commutation selon la revendication 1, **caractérisé en ce qu'**exactement un angle de commande (K1) est commandé de manière réduite au cours de chaque cycle électrique complet.

3. Procédé de commutation selon la revendication 1, **caractérisé en ce que**, en cas de commutation bipolaire du moteur électrique (1), pour chaque cycle complet chaque phase (U, V, W) est commandée par exactement un angle de commande (K2) non réduit, soit seules les demi-ondes supérieures soit seules les demi-ondes inférieures des angles de commande (K1) associés à l'excitation bipolaire sont alors raccourcies.

4. Procédé de commutation selon la revendication 1, **caractérisé en ce que**, en cas de commutation bipolaire, les deux angles de commande (K1, K3) d'une phase (U) sont commandés de manière réduite par rapport aux angles de commande (K2) correspondants de l'autre ou des autres phases (V, W).
